Europäisches Patentamt

European Patent Office

Office européen des brevets

(19)

(11) Veröffentlichungsnummer: **0 347 721**
**A2**

(12) **EUROPÄISCHE PATENTANMELDUNG**

(21) Anmeldenummer: **89110680.9**

(22) Anmeldetag: **13.06.89**

(51) Int. Cl.4: **H04N 3/30 , H04N 3/233**

(30) Priorität: **18.06.88 DE 3820727**

(43) Veröffentlichungstag der Anmeldung:
**27.12.89 Patentblatt 89/52**

(84) Benannte Vertragsstaaten:
**DE FR GB NL**

(71) Anmelder: **NOKIA UNTERHALTUNGSELEKTRONIK (DEUTSCHLAND) GMBH**
**Östliche Karl-Friedrich-Strasse 132**
**D-7530 Pforzheim(DE)**

(72) Erfinder: **Dobbert, Gerd**
**Drosselweg 3**
**D-7301 Deizisau(DE)**
Erfinder: **Köhler, Günter**
**Bussardweg 7**
**D-7312 Kirchheim(DE)**

(54) **Verfahren und Vorrichtung zur horizontalen Rasterkorrektur bei Dreiecks- oder Sinusablenkung.**

(57) Bei bekannten Kathodenstrahl-Bildröhren mit Dreiecks-oder Sinusablenkung kommt es zu Phasenverschiebungen zwischen den Videosignalen und dem Ablenkstrom. Es wird vorgeschlagen, in die Mitte der jeweils letzten hin- und rücklaufenden Zeile eines jeden Halbbildes eine Referenzmarke einzublenden, deren Lage auf dem Bildschirm mit Hilfe von Sensoren, beispielsweise von Photoelementen, detektiert wird. Die Ausgangssignale der Sensoren werden einer Referenzmarkenauswertung zugeführt, die ein zur Abweichung von der Sollage der Referenzmarken proportionales Korrektursignal abgibt. Mit diesem Korrektursignal wird entweder die Auslesesteuerung für einen Zeilenspeicher oder aber die Horizontal-Endstufe angesteuert.

FIG.1

EP 0 347 721 A2

## Verfahren und Vorrichtung zur horizontalen Rasterkorrektur bei Dreiecks- oder Sinusablenkung

Die Erfindung betrifft ein Verfahren und eine Vorrichtung zur horizontalen Rasterkorrektur für Kathodenstrahl-Bildröhren mit Dreiecks- oder Sinusablenkung.

Moderne digitale Speichertechnik macht es möglich, die Videosignale für Bildwiedergaberöhren so zu modifizieren, daß die Bildinformation aufeinanderfolgender Bildzeilen von links nach rechts und von rechts nach links auf den Bildschirm gebracht werden können, ohne daß die Kompatibilität zu bisherigen Videostandards verloren geht. Hierbei entfällt die bei der herkömmlichen sägezahnförmigen Ablenkung nötige Rücklaufzeit mit ihrer entsprechend hohen Verlustleistung. Bei Dreiecksablenkung sinkt die Leistungsaufnahme um ca. 70%. Ebenso entfällt die bei herkömmlichen Konzepten vorhandene große Totzeit während des Rücklaufs des Elektronenstrahles. Da sich ein Trend in Richtung höherer Zeilenfrequenzen abzeichnet, die naturgemäß höhere Verluste mit sich bringen, sind Ablenkverfahren mit geringerer Leistungsaufnahme wünschenswert.

Aus der EP-A1-0 246 339 ist ein digitales Schaltungssystem für Fernsehempfänger (Schwarz-Weiß-oder Farbfernsehempfänger) mit Kathodenstrahl-Bildröhren bekannt. Im Gegensatz zu üblichen Fernsehempfängern ermöglicht es das bekannte digitale Schaltungssystem, den Bildinhalt eines empfangenen Signales bei allen Kathodenstrahlbewegungen auf dem Bildschirm sichtbar zu machen. Die dazu erforderlichen Ablenksignale werden nicht mehr von einem Sägezahngenerator erzeugt, sondern von einem Ablenkprozessor. Sie sind in Kurvenform und Zeitabhängigkeit frei wählbar. Das mittels eines Taktsignals digitalisierte Videosignal wird einem Random-Access-Speicher eingeschrieben und so ausgelesen, daß die einzelnen Pixels die zugehörigen, senderseitig beabsichtigten Orte auf dem Bildschirm einnehmen. Der Synchronismus zwischen Sender und Empfänger wird durch Phasenregelkreise gewährleistet.

Das bekannte Schaltungssystem hat den Nachteil, daß Einflüsse, die zu einer Phasenverschiebung zwischen Ablenkstrom und Videosignal führen, die also beispielsweise aus einer senkrechten Linie zwei senkrechte Linien machen, nur unvollständig auszugleichen sind. Aufgabe der Erfindung ist es daher, ein Verfahren und eine Vorrichtung anzugeben, mit deren Hilfe Phasenverschiebungen zwischen Ablenkstrom und Videosignal kompensiert werden. Diese Aufgabe wird gelöst durch ein Verfahren mit der Merkmalskombination der Verfahrensansprüche und durch eine Vorrichtung mit der Merkmalskombination der Vorrichtungsansprüche. Das erfindungsgemäße Verfahren hat den Vorteil, daß zur Korrektur einer Phasenverschiebung zwischen Ablenkstrom und Videosignal ein geschlossener Regelkreis benutzt wird. In diesem Regelkreis sind alle Elemente, die eine Phasenverschiebung verursachen, enthalten. Phasenverschiebungen zwischen Ablenkstrom und Videosignal werden durch Arbeitspunktverschiebungen der Leistungstransistoren in der Horizontal-Endstufe oder beispielsweise durch störende Kapazitäten in der Ansteuerschaltung erzeugt. Diese Einflüsse sind darüberhinaus zeit- und temperaturabhängig. Erfindungsgemäß wird auf dem unteren Rand des Bildschirmes, vorzugsweise in Zeilenmitte, eine Referenzmarke erzeugt, die zur Messung der oben erwähnten Phasenverschiebung dient. Die Lage der Referenzmarke wird mit Hilfe von Sensoren detektiert. Eine den Sensoren nachgeschaltete Auswerteschaltung leitet aus den Sensorsignalen ein Korrektursignal ab, das entweder auf die Auslesesteuerung eines Zeilenspeichers oder aber auf die Horizontal-Endstufe einwirkt. Ein weiterer Vorteil der Erfindung liegt in der Absenkung der für die Horizontalablenkung erforderlichen Leistung infolge der Dreiecksablenkung.

Ein Ausführungsbeispiel der Erfindung wird im folgenden beschrieben und anhand der Figuren 1 bis 4 näher erläutert. Es zeigen:

Fig. 1 ein Blockschaltbild eines Fernsehempfängers mit Dreiecks- oder Sinusablenkung und horizontaler Rasterkorrektur,

Fig. 2 Verlauf des Ablenkstromes bei Dreiecksablenkung,

Fig. 3 Horizontal-Endstufe,

Fig. 4 Signalverlauf in der Horizontal-Endstufe.

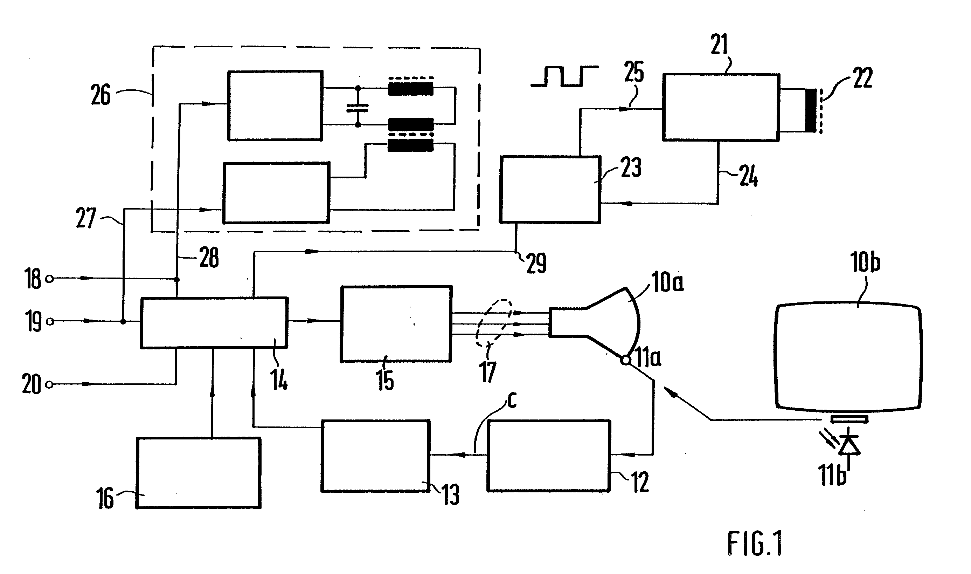

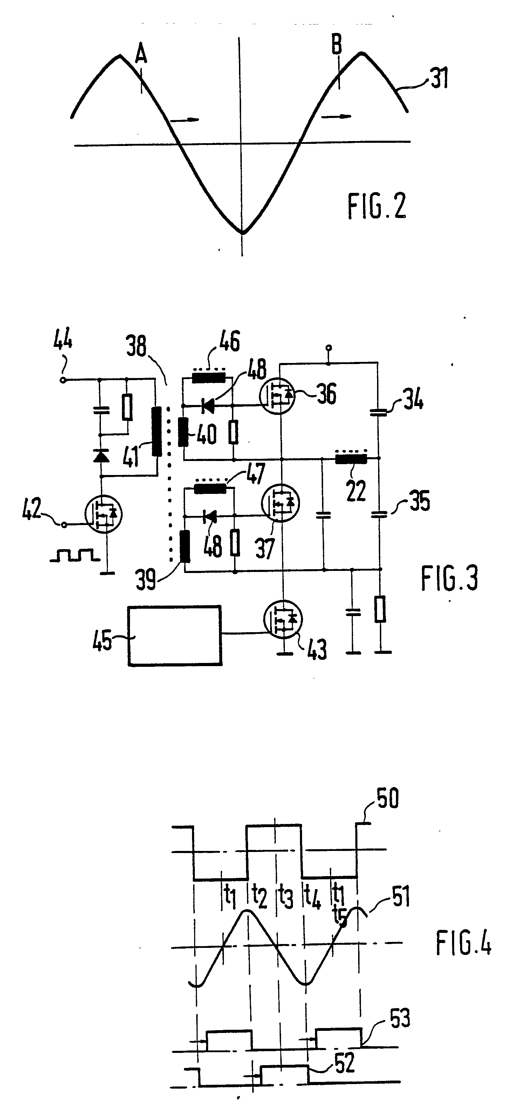

In Fig. 1 ist mit 10a eine Bildröhre bezeichnet, mit 10b eine Draufsicht auf die Schirmseite der Bildröhre nach 10a. Mit 11a sind Sensoren bezeichnet, beispielsweise Photoelemente, die an der Bildröhre in der nach Bezugszeichen 11b dargestellten Art und Weise angebracht werden. Die Ausgangssignale der Sensoren 11a gelangen zu einer Referenzmarkenauswertung 12, an deren Ausgang ein Korrektursignal C zur Verfügung steht. Im hier dargestellten Ausführungsbeispiel gelangt das Korrektursignal C zu einer Auslesesteuerung 13, die einen mit 14 bezeichneten Zeilenspeicher ansteuert. In den Zeilenspeicher 14 werden die Ausgangssignale eines Referenzmarkengebers 16 eingeschrieben. Gleichzeitig gelangt in den Zeilenspeicher über eine mit 20 bezeichnete Leitung ein Videosignal, in dem die Bildinformation enthalten ist. Über eine mit 19 bezeichnete Leitung wird dem Zeilenspeicher ein an der horizontalen Ablenkfrequenz synchronisiertes Taktsignal zugeführt, und über eine mit 18 bezeichnete Leitung ein an der vertikalen Ablenkfrequenz synchronisiertes Signal. Mit 26 ist eine Vertikalablenkstufe bezeichnet, auf die hier jedoch nicht näher eingegangen ist, da sie nicht Gegenstand der Erfindung ist. Die Leitungen 18 und 19 stehen über mit 27 und 28 bezeichnete Verbindungsleitungen mit der Vertikalablenkstufe 26 in Verbindung. Das in den Zeilenspeicher 14 eingeschriebene Videosignal gelangt an eine Videoendstufe 15, deren Ausgangssignale über drei mit 17 bezeichnete Leitungen der Bildröhre 10a zugeführt werden. Der Zeilenspeicher 14 ist weiterhin über eine Leitung 29 mit einem Teiler 23 verbunden. Der Teiler 23 steuert eine mit 21 bezeichnete Horizontal-Endstufe über eine Leitung 25 an, und erhält über eine mit 24 bezeichnete Leitung von der Horizontal-Endstufe 21 ein Vergleichssignal. Die Horizontal-Endstufe 21 steuert eine Ablenkspule 22, deren Induktivität hier gezeichnet ist, an. Die Funktionsweise der in Fig. 1 dargestellten Anordnung wird anhand der Figur 2 erläutert. Ohne die Elemente 11a, 12 und 16, die der horizontalen Rasterkorrektur dienen, kann es zu Phasenverschiebungen zwischen Ablenkstrom und Videosignal kommen. Aus Fig. 2 ergibt sich, wie es zur Aufspaltung einer senkrechten Linie in zwei Linien kommt. Mit 31 ist eine Kurve bezeichnet, die den Verlauf des horizontalen Ablenkstromes über der Zeit wiedergibt. Bei einer Phasenverschiebung des Ablenkstromes gegenüber dem Videosignal nach rechts wird der mit A bezeichnete Bildpunkt näher zum Anfang des Zeilenhinlaufes verschoben, während der mit B bezeichnete Bildpunkt sich vom Ende des Zeilenrücklaufes entfernt. Wegen dieser Verschiebung wird die senkrechte Linie zwischen Hin- und Rücklauf nicht mehr zur Deckung gebracht und als Doppellinie geschrieben. Für die Phasenverschiebung zwischen Ablenkstrom und Videosignal gibt es mehrere Ursachen:
- Arbeitspunktschwankungen in der Horizontal-Endstufe,
- Ansteuerschaltung, z. B störende Kapazitäten.

Das erfindungsgemäße Verfahren arbeitet nun wie folgt: Der Referenzmarkengeber 16 schreibt in den Zeilenspeicher, beispielsweise in eine Speicherzelle, deren Inhalt normalerweise in Zeilenmitte erscheint, eine Referenzmarke ein. Die Ausgabe des Speicherinhaltes wird von der Auslesesteuerung 13 gesteuert. Wird jetzt dafür gesorgt, daß bei jedem Halbbild in der letzten Hin- und der letzten Rücklaufzeile je ein Pixel als Referenzmarke zum Aufleuchten gebracht wird, so stehen am unteren Rand der Bildröhre, für den Betrachter der Bildröhre unsichtbar, Referenzmarken zur Vefügung. Auf der Außenseite der Bildröhre sind Photoelemente (11b) angebracht, die die Lage der Referenzmarken detektieren. Auch diese Photoelemente sind für den Betrachter unsichtbar. Ohne Phasenverschiebung zwischen Videosignal und Ablenkstrom befinden sich die Referenzmarken genau in Bildmitte. Die Referenzmarkenauswertung erzeugt dann kein Korrektursignal C. Weichen die Referenzmarken nach links oder nach rechts von der Bildmitte ab, erzeugt die Referenzmarkenauswertung ein Korrektursignal C, das die Auslesesteuerung 13 beeinflußt. Die Auslesesteuerung 13 sorgt dann dafür, daß die Phasen von Videosignal und Ablenkstrom wieder zur Deckung gebracht werden. Die Rasterkorrektur kann jedoch auch auf andere Weise vorgenommen werden, als über den Eingriff in die Auslesesteuerung 13. So kann beispielsweise das Korrektursignal C dazu benutzt werden, die Ansteuerung der Leistungstransistoren in der Horizontal-Endstufe 21 zu beeinflussen. Auch auf diese Weise wird die Phasendifferenz zwischen Videosignal und Ablenkstrom ausgeglichen. Zur horizontalen Rasterkorrektur ist man nicht darauf beschränkt, die Sensoren 11a, wie im Ausführungsbeispiel, am unteren Rand der Bildröhre anzubringen. Es sind auch Lösungen, bei denen die Sensoren am oberen Rand angebracht sind, denkbar. Darüberhinaus lassen sich die Referenzmarken nicht nur in Bildmitte, sondern auch am Rand oder in Bildmitte und am Rand oder dazwischen anbringen. Bei Farbbildröhren wird nur das grüne System wegen seiner Mittellage im Bildröhrenhals zur Erzeugung der Referenzmarken herangezogen.

Fig. 3 zeigt eine Horizontal-Endstufe für Dreiecksablenkung. Mit 38 ist ein Transformator bezeichnet, durch dessen Primärwicklung 41 ein von einem Transistor 42 erzeugter Strom fließt. An seiner Eingangsklemme 44 liegt eine Spannung U. Auf die zur Primärwicklung parallel geschalteten Elemente Diode, Kondensator und Widerstand wird nicht näher eingegangen, da ihre Funktionsweise allgemein bekannt ist. Mit 39 und 40 sind Sekundärwicklungen des Transformators 38 bezeichnet, die über eine aus Induktivitäten 46, 47 und Dioden 48, 49 bestehende Parallelschaltung mit den Gates von Transistoren 36 und 37 verbunden sind. Die beiden Transistoren 36 und 37 dienen der Ansteuerung der Ablenkspule 22. Zur Ost-West-Korrektur dient ein Vertikal-Parabel-Generator 45 in Verbindung mit einem Transistor 43.

Zur Erläuterung der Ansteuerung der beiden Transistoren 36 und 37 dient Figur 4. Mit 50 ist eine über der Ablenkspule 22 liegende Spannung bezeichnet. An den Gates der Transistoren 36 und 37 liegen Steuersignale an, die mit 52 und 53 bezeichnet sind. Diese Signalverläufe führen zu einem Strom durch die Ablenkspule 22, der einen mit 51 bezeichneten Verlauf hat. Die Transistoren 36 und 37 werden dann wie folgt angesteuert: Transistor 37 sei zum Zeitpunkt $t_1$ durchgeschaltet, so daß der Strom über die Kondensatoren 34 und 35 und die Ablenkspule 22 fließt. Durch die Induktivität der Ablenkspule steigt der Strom nach einer Exponentialfunktion an. In den Ablenkspulen wird magnetische Energie gespeichert. Zum Zeitpunkt $t_2$ wird der Transistor 37 abgeschaltet. Zu diesem Zeitpunkt befindet sich in den Ablenkspulen jedoch noch magnetische Energie, dadurch steigt die Spannung sprunghaft ins Positive bis die im Transistor 36 befindliche Diode leitend wird. Vom Zeitpunkt $t_2$ bis $t_3$ fließt nun der Strom nach einer Exponentialfunktion aus den Ablenkspulen heraus und die Kondensatoren 34 und 35 werden negativ aufgeladen. Die in den Ablenkspulen gespeicherte Energie wird nun in die Kondensatoren geladen. Vom Zeitpunkt $t_3$ bis $t_4$ übernimmt dann der Transistor 36 den Ablenkstrom. Die in den Kondensatoren 34 und 35 gespeicherte Energie gelangt als magnetische Energie in die Ablenkspule 22. Sperrt der Transistor 36, springt die Spannung ins Negative. Dann fließt der Strom aus den Ablenkspulen über die im Transistor 37 befindliche Diode und lädt die Kondensatoren 34 und 35 positiv auf. Zum Zeitpunkt $t_5$ ist eine Periode beendet und der ganze Zyklus beginnt von vorn.

Die Transistoren 36 und 37 müssen jeweils vor dem Null-Durchgang eingeschaltet werden. Der Transistor 37 muß in der Zeit $t_4$ bis $t_1$, der Transistor 36 in der Zeit $t_2$ bis $t_3$ aktiviert werden. Um ein Überlappen der Einschaltzeiten der beiden Transistoren zu vermeiden, befindet sich jeweils zwischen den Ansteuerwicklungen und dem Gate der Transistoren eine Induktivität (46, 47), die zusammen mit der Gate-Eingangskapazität eine Verzögerung der Einschaltzeiten beider Transistoren bewirkt. Um eine Verzögerung der Abschaltpunkte $t_2$ und $t_4$ zu vermeiden, ist den Spulen 46 und 47 jeweils eine Diode parallelgeschaltet (48, 49). Der Transistor 42 steuert den Übertrager 38 mit symmetrischen Horizontalimpulsen an.

**Ansprüche**

1. Verfahren zur horizontalen Rasterkorrektur für Kathodenstrahl-Bildröhren mit Dreiecksablenkung oder Sinusablenkung, bei dem ein Zeilenspeicher für mindestens eine Bildzeile von einer Auslesesteuerung angesteuert wird, **gekennzeichnet durch** folgende Schritte:
- Erzeugung von Referenzmarken auf dem Bildschirm der Kathodenstrahl-Bildröhre,
- Detektion der Lage der Referenzmarken mit Hilfe von Sensoren,
- Ableitung eines Korrektursignales aus den Sensorsignalen mit einer Referenzmarkenauswertung,
- Beeinflussung der Auslesesteuerung und/oder einer an sich bekannten Horizontal-Endstufe durch das Korrektursignal.

2. Verfahren nach Anspruch 1, dadurch gekennzeichnet, daß die Referenzmarken von einem Referenzmarkengeber erzeugt werden.

3. Verfahren nach Anspruch 2, dadurch gekennzeichnet, daß der Referenzmarkengeber die Referenzmarken in den Zeilenspeicher einschreibt.

4. Verfahren nach Anspruch 3, dadurch gekennzeichnet, daß die letzte hinlaufende und die letzte rücklaufende Zeile eines jeden Halbbildes mit einer Referenzmarke versehen werden.

5. Verfahren nach Anspruch 4, dadurch gekennzeichnet, daß die Referenzmarken in der Zeilenmitte erscheinen.

6. Verfahren nach Anspruch 5, dadurch gekennzeichnet, daß in der letzten hinlaufenden und der letzten rücklaufenden Zeile je ein Pixel als Referenzmarke verwendet wird.

7. Verfahren nach Anspruch 6, dadurch gekennzeichnet, daß bei Farbbildröhren die Referenzmarken mit dem grünen System erzeugt werden.

8. Verfahren nach Anspruch 1, dadurch gekennzeichnet, daß mehrere Sensoren in Zeilenmitte am unteren Bildrand der Kathodenstrahl-Bildröhre angebracht sind.

9. Verfahren nach Anspruch 8, dadurch gekennzeichnet, daß Photoelemente als Sensoren verwendet werden.

10. Verfahren nach Anspruch 8, dadurch gekennzeichnet, daß jedem Sensor ein eigenes Objektiv zugeordnet ist.

11. Verfahren nach Anspruch 8, dadurch gekennzeichnet, daß alle Sensoren mit einem gemeinsamen Prisma versehen sind.

12. Verfahren nach Anspruch 8, dadurch gekennzeichnet, daß die Sensoren in die Bildröhre integriert sind.

13. Vorrichtung zur horizontalen Rasterkorrektur für Kathodenstrahl-Bildröhren mit Dreiecksablenkung oder Sinusablenkung, mit einem Zeilenspeicher für wenigstens eine Zeile und einer Auslesesteuerung für den Zeilenspeicher, weiterhin mit einer Horizontal-Endstufe, **gekennzeichnet durch**
- einen Referenzmarkengeber,
- mehrere vorzugsweise am unteren Rand der Kathodenstrahl-Bildröhre angebrachte Sensoren,
- eine die Signale der Sensoren auswertende Referenzmarkenauswertung, die ein von einer Phasenverschiebung zwischen Ablenkstrom und Videosignal abhängiges Korrektursignal erzeugt.

14. Vorrichtung nach Anspruch 13, dadurch gekennzeichnet, daß die Horizontalablenkung aus zwei V-MOS-Leistungstransistoren besteht.

15. Vorrichtung nach Anspruch 14, dadurch gekennzeichnet, daß ein Ansteuerübertrager mit zwei Sekundärwicklungen die beiden V-MOS-Leistungstransistoren ansteuert.

16. Vorrichtung nach Anspruch 15, dadurch gekennzeichnet, daß die Gate-Anschlüsse der beiden V-MOS-Leistungstransistoren über eine aus einer Induktivität und einer Diode bestehenden Parallelschaltung mit den Sekundärwicklungen des Ansteuerübertragers verbunden sind.

FIG.1

FIG.2

FIG.3

FIG.4